# EUROPEAN PATENT SPECIFICATION

(11) **EP 0 776 955 B1**
(45) Date of publication and mention of the grant of the patent: **16.08.2001**
(21) Application number: 96118847.1
(22) Date of filing: 25.11.1996
(51) Int. Cl.: C09J 123/08

(54) **Hot melt adhesive**
Heisskleber
Colle thermofusible

(30) Priority: 01.12.1995 US 565786
(43) Date of publication of application: 04.06.1997
(73) Proprietor: H.B. Fuller Licensing & Financing, Inc., St. Paul, Minnesota 55110-5132 (US)
(72) Inventor: Albrecht, Steven, Forest Lake, Minnesota 55025 (US); Kueppers, Michelle, Eagan, Minnesota 55123 (US)
(74) Representative: Maiwald, Walter, Dr. Dipl.-Chem.

(56) References cited:
- EP-A- 0 353 048
- JP-A- 8 134 421
- US-A- 3 652 474

## Description

### Field Of The Invention

The composition of the present invention is a hot melt adhesive designed for use in the packaging area; specifically in the case and carton sealing, box forming and tray forming areas. This hot melt is useful for application temperatures of less than about 154°C.

### Background Of The Invention

Hot melt adhesives are used widely in the packaging industry for such applications as case and carton sealing, tray forming and box forming. The substrates to be bonded include virgin and recycled kraft, high and low density kraft, chipboard and various types of treated and coated kraft and chipboard. Hot melts are required to exhibit full fiber tearing bonds. This means that all the fiber must be removed from the substrate along the entire length of the adhesive bead when the bond is separated by hand. Generally, in order to get full fiber tearing bonds, hot melts need to be applied at temperatures of about 175°C. The hot melts are oftentimes applied using piston pump or gear pump extrusion equipment. Such equipment is manufactured by Nordson, ITW or Slautterback. Sometimes an adhesive may not give sufficient fiber tearing bonds. In addition to the requirement that the adhesive give full fiber tearing bonds, customers are demanding higher performance in hot melt adhesives such as good thermal stability. Thermal stability generally means that the product will not darken in the glue pot with prolonged aging, will not produce char, skin or gel, and will not have a substantial viscosity change over time. High application temperatures can cause degradation which leads to char, skin and gel formation, discoloration and viscosity changes. Therefore, lowering the application temperature is desirable because it can improve the thermal stability. In addition to improving thermal stability, lowering the application temperature increases safety to workers by reducing the risk of burns, decreasing the amount of electricity required to heat the adhesives which can result in savings in energy costs, decreasing maintenance costs, and reducing the amount of odors and fumes coming from the adhesive. Decreasing the odor and fumes coming from the adhesive can be very appealing to customers, and to the employees who work in the plants which utilize the hot melt adhesives.

The above aforementioned problems can be avoided by the development of adhesives that may be applied at temperatures of less than about 154°C, and preferably applied at temperatures of about 135°C to about 150°C. Commercial adhesives designed for application temperatures of about 135°C to about 154°C are available. These adhesives contain polymers with melt indices of at least 750 g/10 min. It should be recognized that adhesives for lower application temperatures still fall under the general category of hot melt adhesives.

U.S. Patent No. 5,041,482 to Ornstern et al. discloses that glue stick adhesives for use in glue guns can be applied at application temperatures in the 82°C to 138°C range, and preferably less than 121°C. Glue stick adhesives are higher in viscosity and will not work in piston pump or gear pump extrusion equipment like those manufactured by Nordson, ITW or Slautterback. This type of equipment is used widely in the packaging industry for applying adhesives via an extrusion method. Piston pump or gear pump extrusion equipment requires a much lower viscosity than that which can be used in a glue gun. Therefore, glue sticks could not be used in Nordson type hot melt application equipment.

U.S. Patent No. 5,373,049 to Ornstern et al. teaches cool melt adhesives designed with backbone polymers having a melt index of at least 750 g/10 min. Polymers with melt indices of lower than 650 g/10 min. may be used in combination with said polymer but not as the sole polymer in the formula. In fact, Ornstern discusses that traditional hot melt adhesives have polymers with melt indices in the 1.5 to 550 g/10 min. range making them not amenable for application processes operating at temperatures of below 150°C due to high viscosities.

U.S. Patent No. 5,331,033 to Stauffer et al. teaches hydrocarbon resins used in combination with ethylene n-butyl acrylate copolymers and high melting synthetic waxes. These hot melts have been designed for application temperatures of about 175°C. This patent also teaches that ethylene n-butyl acrylates achieve densities of less than about 0.98 whereas ethylene vinyl acetate formulations with desirable physical characteristics do not. Such densities make the adhesives useful for case and carton recycling operations where the density of the adhesive must be lower than that of the resulting pulp in order for separation of the adhesive from the pulp to be achieved through filtration. It is not desirable for adhesive to remain in the pulp.

The present invention provides a hot melt adhesive utilizing a combination of a lower melt index copolymer, a tackifying resin, and a paraffin wax that can be used in applications where the application temperature is less than 154°C, and overcomes the aforementioned problems.

### Summary Of The Invention

The present invention discloses a hot melt adhesive comprising a) from 20% to 50% by weight of at least one ethylene vinyl acetate copolymer containing from 15% to 45% by weight vinyl acetate monomer and having a melt index of less than 700 g/10min.; b) from 20% to 60% of a tackifying resin selected from the group consisting of aliphatic, cycloaliphatic and aromatic hydrocarbon resins and hydrogenated derivatives thereof, rosins and rosin derivatives, and terpenes and terpene derivatives; c) from 10% to 40% of a paraffin wax having a melt point of 55°C to 85°C; and d) from 0% to 1.5% stabilizer, with the proviso that the Ring and Ball softening point of the ethylene vinyl acetate copolymer is below 105°C (220°F). It may also contain up to 20% by weight of a high melting point synthetic wax. The resultant adhesives are characterized by viscosities of less than 5000 cps at 154°C, a Ring and Ball softening point of 80°C to 115°C, fiber tearing bonds on kraft paper or paperboard in the range of -20°F to 160°F (-30°C to 70°C), and densities of less than 0.98. These densities of less than 0.98 allows the adhesive to be easily separated from the pulp in case and carton recycling operations whereas their higher density counterparts are not.

These adhesives can be used in all kinds of extrusion type packaging operations where paper and paperboard are used such as various kinds of kraft paper and paperboard. Particularly, these adhesives are very useful in packaging applications where corrugated kraft paper is used for box formation.

Adhesives of the present invention have superior adhesion to paper or paperboard substrates. The adhesives of the present invention achieve densities of less than about 0.98 which make them useful for recycling. Use of paraffin wax in combination with the tackifying resins and the lower melt index EVA copolymer overcomes the reduced adhesion problems generally associated with application temperatures of less than 175°C, and the use of a paraffin wax further allows the adhesive to be applied at lower temperatures. Contrary to what the prior art teaches, ethylene vinyl acetate copolymers with melt indices of less than 700 g/10 min. can be used as the backbone polymer of a hot melt adhesive designed for application temperatures of less than 154°C. In fact, the present invention overcomes the many drawbacks of a higher viscosity adhesive without resorting to higher application temperatures. Also, the lower the melt index of an ethylene vinyl acetate copolymer, the higher the cohesive strength and the higher the heat resistance keeping all other things the same. It is an advance in the art to provide a hot melt adhesive that imparts increased adhesion when applied at temperatures of less than 154°C, and preferably at temperatures of 135°C to 150°C.

### Detailed Descriptions Of The Preferred Embodiments

The ethylene vinyl acetate copolymers useful herein are those containing from 15% to 45% by weight vinyl acetate, and preferably from 25% to 40%, and most preferably from 30% to 35%; and having a melt index of less than 700 g/10 min., and preferably a melt index of less than 600 g/10 min., and more preferably a melt index of 400 g/10 min with the proviso that the Ring and Ball softening point of the ethylene vinyl acetate copolymer is below 105°C (220°F). The preferred copolymers are Elvax™ 210 and Elvax™ 140, both available from DuPont Company, Wilmington, DE. Mixtures of ethylene vinyl acetate copolymers may also be used as long as the resultant mixture falls within the described ranges of percent vinyl acetate by weight, and melt index and Ring and Ball softening point. It is therefore possible to mix two ethylene vinyl acetates having different melt indices and different percentages of vinyl acetate. These copolymers are useful in the range from 20% to 50% by weight in the adhesive, preferably from 25% to 40%.

The tackifying resins useful herein are selected from the group of aliphatic. cycloaliphatic, aromatic hydrocarbon resins, and hydrogenated derivatives thereof, rosins and rosin derivatives, and terpenes and terpene derivatives having a Ring and Ball softening point of between 70°C and 150°C. One skilled in the art would recognize that these tackifying resins are available with differing levels of hydrogenation. Useful resins include Eastotac™ H-100 and H-130 from Eastman Chemical Company, Kingsport, TN which is a partially hydrogenated cycloaliphatic petroleum hydrocarbon resin, Escorez™ 5300 available from Exxon Chemical Company, Houston, TX which is also a partially hydrogenated cycloaliphatic petroleum hydrocarbon resin, Wingtack™ Extra which is an aliphatic, aromatic petroleum hydrocarbon resin available from Goodyear Chemicals, Akron, OH, Hercolite™ 2100 which is a partially hydrogenated cyclaliphatic petroleum hydrocarbon resin available from Hercules, Wilmington, DE, Zonatac™ 105 Lite which is a styrenated terpene hydrocarbon resin, made from d-limonene and available from Arizona Chemical, Panama City, FL, Sylvatac™ 1103 available from Arizona Chemical, Panama City, FL, and Unitac™ R-100 Light available from Union Camp and Permalyn 305 available from Hercules, Wilmington, DE, which are all pentaerythritol rosin esters, and Nirez™ V2040, a terpene phenolic resin available from Arizona Chemical, Panama City, FL. These tackifiers are useful in the range from 20% to 60% by weight in the adhesive, and preferably from 30% to 45% by weight.

The paraffin waxes useful herein are those having a Ring and Ball softening point of 55°C to 85°C. The preferred waxes are Okerin™ 236TP available from Astor Wax Corporation, Doraville, GA, Penreco™ 4913 available from Pennzoil Products Company, Houston, TX, R-7152 Paraffin Wax available from Moore & Munger, Shelton, CT, and Paraffin Wax 1297 available from International Waxes, Agincourt, Ontario. These waxes are useful in the range from 10% to 40% by weight in the adhesive, and preferably from 25% to 35% by weight.

The synthetic high melting waxes useful herein are high density, low molecular weight polyethylene waxes, by-product polyethylene waxes, and Fischer-Tropsch waxes. Preferred waxes include Petrolite™ C-4040, Polywax™ 1000 or 2000, low molecular weight polyethylene waxes available from Bareco, Tulsa, OK, Escomer™ H-101, a modified polyethylene wax available from Exxon Chemical, Houston, TX, Marcus™ 200 a low molecular weight polyethylene by-product wax available from Marcus Chemical, Houston, TX, and Paraflint™ H-4, a Fischer-Tropsch wax available from Sasol-SA/Moore & Munger, Shelton, CT. These waxes are useful in the range from 0% to 20% by weight of the adhesive, and preferably less than 10% by weight.

A stabilizer or antioxidant is also preferably used in hot melt adhesives. These compounds are added to protect the adhesive from degradation caused by reaction with oxygen induced by such things as heat, light, or residual catalyst from the raw materials such as the tackifying resin. Such antioxidants are commercially available from Ciba-Geigy, Hawthorne, NY, and include Irganox™ 1010 and Irganox™ 1076 which are hindered phenols. These are primary antioxidants which act as radical scavengers and may be used alone or in combination with other antioxidants such as phosphite antioxidants like Irgafos™ 168 available from Ciba-Geigy, Hawthorne, NY. Phosphite catalysts are considered secondary catalysts and are not generally used alone. These are primarily used as peroxide decomposers. Other available catalysts are Cyanox™ LTDP available from American Cyanamide, Stamford, CT and Ethanox™ 1330 available from Albemarle. Baton Rouge, LA. Many such antioxidants are available either to be used alone or in combination with other such antioxidants. These compounds are added to the hot melts in small amounts and have no effect on the other physical properties. Other compounds that could be added that also do not affect physical properties are pigments which add color, or fluorescing agents, to mention only a couple. Additives like these are known to those skilled in the art.

The adhesives are prepared by blending the components in the melt at temperatures of between 130°C and 200°C until a homogeneous mixture is obtained. Various methods of blending are used in the adhesive industry and any method that works is satisfactory.

The resulting adhesives are characterized by viscosities of less than 5000 cps at 150°C, densities of less than 0.98, Ring and Ball softening points of 60°C to 115°C, and exhibit excellent fiber tearing bonds on kraft paper in the temperature range from 0°F (-18°C) to 160°F (71°C). These hot melts are ideal for case and carton sealing and for tray forming applications where various kinds of paper and paperboard are used such as virgin and recycled kraft, chipboard and various kinds of treated and coated kraft and chipboard. These adhesives have shown superior bonding performance over commercial counterparts in this temperature range. For the preferred formulations of the present invention, excellent fiber tearing bonds are obtained in the temperature range of -29°C to 71°C, even on hard to bond substrates.

This invention is further illustrated by the following non-limiting examples.

### EXAMPLES

### Test Methods

### 1. Melt Viscosities

The melt viscosities of the hot melt adhesives were determined on a Brookfield Thermosel Viscometer Model LVDV 2+ using a number 21 spindle.

### 2. Peel and Shear

Peel and shear values were determined by placing samples in a programmed oven with 100g weights used for the peel mode and 500g weights used for the shear mode, and ramping the temperature up from 100°C to 175°C at 25°C/hour. The oven automatically recorded the temperature at which the samples failed. Each sample was coated onto kraft paper by hand using glass rods or shims. The resultant coating is a one inch wide band that is about 8-10 mils or about .008 to about .010 inches thick. Four to five bonds were made for the peel mode and four to five bonds were made for the shear mode and the results were averaged.

### 3. Bonding Tests

Adhesive bonds were made on various substrates using an application temperature of about 175°C, an open time of 1 second, a set time of 1 second, and a bead size of 0.16 cm (1/16 inch) for the chipboard type substrates and 0.32 cm (1/8 inch) for the corrugated substrates. The resulting bonds were then conditioned for at least 24 hours at the different test temperatures, and then separated by hand and the amount of fiber tear was determined. A minimum of three samples are tested for each adhesive at each of the different temperatures and the adhesives were then rated using a system of poor, good or excellent. Poor bonds were those where a small amount or no fiber tear was seen; good bonds showed roughly half or more fiber tear; and excellent bonds showed a substantial amount of fiber tear or close to full fiber tear.

### 4. Heat Stability Tests

A 250g sample of each of the adhesives was placed in a forced air oven at 145°C (300°F) and allowed to sit in the oven for 200 hours. A small portion of the adhesive, from 10g to 20g, was removed from the jar at 24, 48, 72, 96 and 200 hours. Viscosity and Molten Gardner Color are then measured for these time intervals and the changes are consequently monitored. The change in viscosity is reported as a percentage change from the initial viscosity and is calculated by subtracting the viscosity taken at each time interval from the initial viscosity and dividing by the initial viscosity. The Molten Gardner Color is reported as a unit change in color from the initial color to the color taken at each time interval. The smaller the change in viscosity and color the better the heat stability.

### Examples 1, 2, 3, 4 and Commercial Cool Melts A + B, and Standard Commercial Hot Melt C

The following adhesive formulations are provided for illustrative purposes only. All of the adhesives were prepared in what is known in the art as an upright or lightening mixer at temperatures of about 175°C by blending the components until a homogeneous mixture resulted.

These examples illustrated the benefits gained using adhesives of the present invention, Examples 1,2,3 and 4, over that of two commercial cool melt adhesives A and B, and a standard hot melt adhesive C. The ingredients for Examples 1, 2, 3 and 4 are shown in Table I. These adhesives were tested according to the test methods listed above, and the results are shown in Table II.

**TABLE I**

| ADHESIVE COMPONENTS | | | | |
|---|---|---|---|---|
| Example | 1 | 2 | 3 | 4 |
| EVA (33-400) | 34.74 | 35.0 | 35.0 | 35.0 |
| Paraffin 155F | 31.58 | 24.0 | 24.0 | 24.0 |
| Synthetic Wax | --- | 5.7 | 5.7 | 5.7 |
| Eastotac H130R (hydrocarbon resin) | 33.36 | 35.0 | -- | -- |
| Sylvatac 1103 (rosin ester) | --- | -- | 35.0 | -- |
| Nirez V-2040 (terpene phenolic) | --- | -- | --- | 35.0 |
| Irganox 1076 | 0.32 | 0.3 | 0.3 | 0.3 |

**TABLE II**

| TEST RESULTS | | | | | | |
|---|---|---|---|---|---|---|
| Example | 1 | 2 | 3 | 4 | A | B |
| Viscosity @ (300°F) 149°C | 800 | 1000 | 940 | 1420 | 730 | 650 |
| Density @ 24°C | 0.95 | 0.96 | 0.97 | 0.96 | 0.95 | 0.96 |
| Peel (°F) | 125 | 132 | 129 | 136 | 145 | 129 |
| Shear (°F) | 148 | 153 | 149 | 152 | 174 | 158 |

**TABLE III**

| ADHESION TO RECYCLED CORRUGATED | | | | | | |
|---|---|---|---|---|---|---|
| Example | 1 | 2 | 3 | 4 | A | B |
| @ (40°F) 4,4°C | excel | excel | excel | excel | poor | poor |
| @ (0°F) 17.8°C | excel | excel | poor | excel | poor | poor |
| @ (-20°F) -28,5°C | excel | poor | poor | good | poor | poor |
| @ (120°F) 48,9°C | excel | excel | excel | excel | excel | excel |

**TABLE IV**

| ADHESION TO HIGH DENSITY LINER | | | | | | |
|---|---|---|---|---|---|---|
| Example | 1 | 2 | 3 | 4 | A | B |
| @ (40°F) 4.4°C | excel | excel | --- | good | poor | poor |
| @ (0°F) 17.8°C | excel | excel | poor | excel | poor | poor |
| @ (-20°F) -28.5°C | poor | good | --- | poor | poor | poor |
| @ (120°F) 48.9°C | excel | excel | --- | excel | excel | excel |

The bonding results in the above table showed the superiority of the present invention in bonding cases, cartons and trays. The viscosities showed that the products of the present invention were low enough to be applied at temperatures of less than 154°C. Peel and shear data were as good as the commercial hot melts.

**TABLE V**

| HEAT STABILITIES | | | | | | |
|---|---|---|---|---|---|---|
| Example | 1 | 2 | 3 | 4 | B | C |
| % Viscosity Change | | | | | | |
| @ 96 Hours | 3.5 | 2.3 | 3.2 | 8.6 | 3.7 | 17.0 |
| @ 200 Hours | 4.6 | 2.5 | 5.3 | 11.7 | 5.9 | 50.0 |

| Color Change | | | | | | |
|---|---|---|---|---|---|---|
| @ 96 Hours | 4 | 4 | 2 | 3 | 3 | 4 |
| @ 200 Hours | 6 | 6 | 3 | 4 | 6 | 6 |

The heat stabilities for Examples 1, 2, 3, 4 and B were run at 149°C (300°F) while Example C was run at 177°C (350°F). Example C is a standard hot melt adhesive and would typically be applied at a temperature of 177°C (350°F) while the others would be applied at a temperature of about 149°C (300°F) or less. A temperature of 177°C (350°F) would give the poorest heat stability results as compared to lower temperatures. As demonstrated by the above data, the commercial hot melt adhesive applied at 177°C (350°F) has much poorer stability as a result of the higher application temperature.

## Claims

1. A hot melt adhesive composition useful for application to a carton, case, or tray at a temperature of less than 154°C, comprising:
a) from 20% to 50% by weight of at least one ethylene vinyl acetate copolymer containing from 15% to 45% by weight vinyl acetate monomer and having a melt index of less than 700 g/10min.;
b) from 20% to 60% of a tackifying resin selected from the group consisting of aliphatic, cycloaliphatic and aromatic hydrocarbon resins and hydrogenated derivatives thereof, rosins and rosin derivatives, and terpenes and terpene derivatives;
c) from 10% to 40% of a paraffin wax having a melt point of 55°C to 85°C; and
d) from 0% to 1.5% stabilizer,
with the proviso that the Ring and Ball softening point of the ethylene vinyl acetate copolymer is below 105 °C (220 °F).

2. A carton, case or tray utilizing a hot melt adhesive capable of being applied at temperatures of less than 154°C, comprising:
a) from 20% to 50% by weight of at least one ethylene vinyl acetate copolymer containing from 15% to 45% by weight vinyl acetate monomer and having a melt index of less than 700 g/10min.;
b) from 20% to 60% of a tackifying resin selected from the group consisting of aliphatic, cycloaliphatic and aromatic hydrocarbon resins and hydrogenated derivatives thereof, rosins and rosin derivatives, and terpenes and terpene derivatives;
c) from 10% to 40% of a paraffin wax having a melt point of 55°C to 85°C; and
d) from 0% to 1.5% stabilizer,
with the proviso that the Ring and Ball softening point of the ethylene vinyl acetate copolymer is below 105 °C (220 °F).

3. The holt melt adhesive of Claim 1 wherein the density of the adhesive is less than 0.98.

4. The hot melt adhesive of Claim 1 wherein the ethylene vinyl acetate copolymer in the adhesive has a melt index of less than 600 g/10min.

5. The hot melt adhesive of Claim 1 wherein the ethylene vinyl acetate copolymer in the adhesive contains from 25% to 40% by weight vinyl acetate.

6. The hot melt adhesive of Claim 1 wherein the ethylene vinyl acetate copolymer in the adhesive contains from 30% to 35% by weight vinyl acetate.

7. The hot melt adhesive of Claim 1 wherein the tackifying resin in the adhesive has a Ring and Ball softening point of 70°C to 150°C.

8. The hot melt adhesive of Claim 1 wherein the adhesive contains from 0% to 20% by weight of a synthetic high melting wax selected from the group consisting of high density, low molecular weight polyethylene waxes, by-product polyethylene waxes and Fischer-Tropsch waxes.

9. The hot melt adhesive of Claim 1 wherein the synthetic high melting wax in the adhesive is a Fischer-Tropsch wax.

10. The hot melt adhesive of Claim 1 wherein the adhesive comprises a blend of ethylene vinyl acetate containing from 30% to 35% by weight vinyl acetate and a melt index of less than 600 g/10 min.; a tackifying resin selected from the group consisting of aliphatic, cycloaliphatic and aromatic hydrocarbon resins and hydrogenated derivatives thereof, rosins and rosin derivatives, and terpenes and terpene derivatives having a Ring and Ball softening point of 55°C to 75°C; a Fischer-Tropsch wax of less than 10% by weight; and a stabilizer.

## Patentansprüche

1. Heißschmelzklebstoffzusammensetzung verwendbar zum Einsatz auf einem Karton, einer Pappschachtel oder Schale ("tray") bei einer Temperatur von weniger als 145°C, umfassend:
a) 20 bis 50 Gew.-% mindestens eines Ethylenvinylacetat-Copolymers, welches 15 bis 45 Gew.-% Vinylacetat-Monomer enthält und einen Schmelzindex von weniger als 700 g/10 min aufweist;
b) 20 % bis 60 % eines klebrig machenden Harzes, das aus der Gruppe bestehend aus aliphatischen, cycloaliphatischen und aromatischen Kohlenwasserstoffharzen und deren hydrierten Derivaten, Kolophonium und Kolophoniumderivaten, Terpenen und Terpenderivaten ausgewählt ist;
c) 10 % bis 40 % eines Paraffinwachses mit einem Schmelzpunkt von 55°C bis 85°C; und
d) 0 % bis 1,5 % Stabilisator,
vorausgesetzt, daß der Erweichungspunkt des Ethylenvinylacetat-Copolymers nach der Ring-und Kugelmethode unterhalb von 105°C (220°F) liegt.

2. Karton, Pappschachtel oder Schale, einen Heißschmelzklebstoff verwendend der bei Temperaturen von weniger als 154°C aufgetragen werden kann, umfassend:
a) 20 bis 50 Gew.-% mindestens eines Ethylenvinylacetat-Copolymers, welches 15 bis 45 Gew.-% Vinylacetat-Monomer enthält und einen Schmelzindex von weniger als 700 g/10 min aufweist;
b) 20 % bis 60 % eines klebrig machenden Harzes, das aus der Gruppe bestehend aus aliphatischen, cycloaliphatischen und aromatischen Kohlenwasserstoffharzen und deren hydrierten Derivaten, Kolophonium und Kolophoniumderivaten sowie Terpenen und Terpenderivaten ausgewählt ist;
c) 10 % bis 40 % eines Paraffinwachses mit einem Schmelzpunkt von 55°C - 85°C; und
d) 0 % bis 1,5 % Stabilisator,
vorausgesetzt, daß der Erweichungspunkt des Ethylenvinylacetat-Copolymers nach der Ring-und Kugelmethode unterhalb von 105°C (220° F) liegt.

3. Heißschmelzklebstoff nach Anspruch 1, wobei die Dichte des Klebstoffs geringer als 0,98 ist.

4. Heißschmelzklebstoff nach Anspruch 1, wobei das Ethylenvinylacetat-Copolymer in dem Klebstoff einen Schmelzindex von weniger als 600 g/10 min aufweist.

5. Heißschmelzklebstoff nach Anspruch 1, wobei das Ethylenvinylacetat-Copolymer in dem Klebstoff 25 bis 40 Gew.-% Vinylacetat enthält.

6. Heißschmelzklebstoff nach Anspruch 1, wobei das Ethylenvinylacetat-Copolymer in dem Klebstoff 30 bis 35 Gew.-% Vinylacetat enthält.

7. Heißschmelzklebstoff nach Anspruch 1, wobei das klebrig machende Harz in dem Klebstoff einen Erweichungspunkt nach der Ring- und Kugelmethode von 70°C bis 150°C aufweist.

8. Heißschmelzklebstoff nach Anspruch 1, wobei der Klebstoff 0 bis 20 Gew.-% eines synthetischen hochschmelzenden Wachses enthält, das aus der Gruppe bestehend aus hochdichten niedrigmolekulargewichtigen Polyethylenwachsen, Nebenprodukt-Polyethylenwachsen und Fischer-Tropsch Wachsen ausgewählt ist.

9. Heißschmelzklebstoff nach Anspruch 1, wobei das synthetische hochschmelzende Wachs in dem Klebstoff ein Fischer-Tropsch Wachs ist.

10. Heißschmelzklebstoff nach Anspruch 1, wobei der Klebstoff umfaßt: einen Blend aus Ethylenvinylacetat, der 30 bis 35 Gew.-% Vinylacetat enthält und einen Schmelzindex von weniger als 600g/ 10 min aufweist; ein klebrig machendes Harz, das aus der Gruppe bestehend aus aliphatischen, cycloaliphatischen und aromatischen Kohlenwasserstoffharzen und deren hydrierten Derivaten, Kolophonium und , Kolophoniumderivaten, sowie Terpenen und Terpenderivaten mit einem Erweichungspunkt nach der Ring- und Kugelmethode von 55°C bis 75°C ausgewählt ist; ein Fischer-Tropsch Wachs mit weniger als 10 Gew.-%; sowie einem Stabilisator.

## Revendications

1. Composition d'adhésif de type colle fusible utilisée pour être appliquée sur un carton, une protection, ou un plateau ("tray") à une température inférieure à 154°C, comprenant :
a) de 20% à 50% en poids d'au moins un copolymère d'éthylène d'acétate de vinyle composé de 15% à 45% en poids du monomère d'acétate de vinyle et ayant un indice de fusion inférieur à 700 g/10min ;
b) de 20% à 60% d'une résine collante ("tackifying resin") choisie dans le groupe des résines d'hydrocarbones aromatiques, aliphatiques, cycloaliphatiques et des dérivés hydrogénés de ceux-ci, colophanes et dérivés de colophane, terpènes et dérivés de terpène ;
c) de 10% à 40% de cire de type paraffine ayant un point de fusion de 55°C à 85°C ; et
d) de 0% à 1,5% de stabilisant,
avec la condition que le point de ramollissement ("softening point") selon le procédé du type bille et anneau ("Ring and Ball") du copolymère d'éthylène d'acétate de vinyle est inférieur à 105°C (220°F).

2. Carton, protection ou plateau utilisant un adhésif de type colle fusible capable d'être appliqué à des températures de moins de 154°C, comprenant :
a) de 20% à 50% en poids d'au moins un copolymère d'éthylène d'acétate de vinyle composé de 15% à 45% en poids du monomère d'acétate de vinyle et présente un indice de fusion inférieur à 700 g/10min ;
b) de 20% à 60% d'une résine collante ("tackifying resin") choisie dans le groupe formé par les résines d'hydrocarbones aromatiques, aliphatiques, cycloaliphatiques et les dérivés hydrogénés de ceux-ci, colophanes et dérivés de colophane, terpènes et dérivés de terpène ;
c) de 10% à 40% de cire de type paraffine ayant un point de fusion de 55°C à 85°C ; et
d) de 0% à 1,5% de stabilisant,
avec la condition que le point de ramollissement du type Ring and Bail du copolymère d'éthylène d'acétate de vinyle est inférieur à 105°C (220°F).

3. Adhésif de type colle fusible selon la revendication 1, dans lequel la densité de l'adhésif est inférieure à 0,98.

4. Adhésif de type colle fusible selon la revendication 1, dans lequel le copolymère d'éthylène d'acétate de vinyle dans l'adhésif présente un indice de fusion inférieur à 600g/10min.

5. Adhésif de type colle fusible selon la revendication 1, dans lequel le copolymère d'éthylène d'acétate de vinyle de l'adhésif contient de 25% à 40% en poids d'acétate de vinyle.

6. Adhésif de type colle fusible selon la revendication 1, dans lequel le copolymère d'éthylène d'acétate de vinyle de l'adhésif contient de 30% à 35% en poids d'acétate de vinyle.

7. Adhésif de type colle fusible selon la revendication 1, dans lequel la résine collante de l'adhésif présente un point de ramollissement selon le procédé du type bille et anneau de 70°C à 150°C.

8. Adhésif de type colle fusible selon la revendication 1, dans lequel l'adhésif contient de 0% à 20% en poids d'une cire synthétique à point de fusion élevé choisie dans le groupe formé par des cires de type Fischer-Tropsch, des sous-produits de cires en polyéthylène, des cires en polyéthylène à faible poids moléculaire, de hautes densités.

9. Adhésif de type colle fusible selon la revendication 1, dans lequel la cire synthétique à point de fusion élevé de l'adhésif est une cire de type Fischer-Tropsch.

10. Adhésif de type colle fusible selon la revendication 1, dans lequel l'adhésif comprend un mélange d'éthylène d'acétate de vinyle contenant de 30% à 35% en poids d'acétate de vinyle et un indice de fusion inférieur à 600g/10min.; une résine collante choisie dans le groupe formé par les résines d'hydrocarbones aromatiques, aliphatiques, cycloaliphatiques, et des dérivés hydrogénés de ceux-ci, colophanes et dérivés de colophane, terpènes et dérivés de terpène qui ont un point de ramollissement selon le procédé du type bille et anneau de 55°C à 75°C ; une cire du type Fischer-Tropsch inférieure à 10% en poids ; et un stabilisant.
